# EUROPEAN PATENT APPLICATION

(11) **EP 4 836 084 A1**
(43) Date of publication of application: **04.11.2026**
(21) Application number: 24914995.6
(22) Date of filing: 08.11.2024
(51) Int. Cl.: H01M 10/613, H01M 10/6556, H01M 10/6568

(54) **CURRENT COLLECTING ASSEMBLY AND PREPARATION PROCESS THEREFOR, HEAT EXCHANGE APPARATUS, BATTERY AND ELECTRIC DEVICE**

(30) Priority: 04.01.2024 CN 202410012732
(71) Applicant: Contemporary Amperex Technology Co., Limited, Ningde, Fujian 352100 (CN)
(72) Inventor: HU, Longxiang, Ningde, Fujian 352100 (CN); WANG, Tao, Ningde, Fujian 352100 (CN); WANG, Pengli, Ningde, Fujian 352100 (CN); BIN, Xuhai, Ningde, Fujian 352100 (CN); WEI, Anping, Ningde, Fujian 352100 (CN)
(74) Representative: Gong, Jinping
(86) International application number: PCT/CN2024/130935
(87) International publication number: WO 2025/145779

(57) **Abstract**

The present application applies to the technical field of batteries. Provided are a current collecting assembly and a preparation process therefor, a heat exchange apparatus, a battery and an electric device. The current collecting assembly includes a current collector and a connector, where the current collector is a non-metal part, and the connector is a metal part; the current collector and the connector constitute an integrally formed component; and the current collector is connected to a heat exchanger by means of the connector. The present application aims to reduce the processing difficulty of a heat exchange device, and can appropriately reduce the cost.

## Description

The present application claims priority to Chinese Patent Application No. 202410012732.6 entitled "Current Collecting Assembly and Preparation Process Therefor, Heat Exchange Apparatus, Battery and Electric Device" filed on January 4, 2024, which is incorporated herein by reference in its entirety.

### TECHNICAL FIELD

The present application relates to the technical field of batteries, and in particular, to a current collecting assembly and a preparation process therefor, a heat exchange apparatus, a battery and an electric device.

### BACKGROUND

Some devices need to maintain a suitable operating temperature during operation to maintain the stability and continuity of operation, especially batteries, and with the increasing application of batteries, temperature control of batteries has become a problem required be solved, so some heat exchange apparatuses are configured on the batteries to control the temperature of the batteries.

The heat exchange apparatus usually uses a heat exchange medium to realize heat transfer, and some assemblies capable of guiding or collecting the heat exchange medium are required to realize the transmission of the heat exchange medium, so as to perform liquid supply or liquid return operation on each structure.

Generally, the assemblies for collecting current are often manufactured by cutting or turning a metal profile, which is not only difficult to process, but also has a high cost.

### SUMMARY

In view of the above problems, the present application provides a current collecting assembly and a preparation process therefor, a heat exchange apparatus, a battery and an electric device, which aim to reduce the processing difficulty of the current collecting assembly and appropriately reduce the cost.

### TECHNICAL SOLUTION

In a first aspect, the present application provides a current collecting assembly, where the current collecting assembly includes a current collector and a connector, the current collector is a non-metal part, the connector is a metal part, the current collector and the connector are integrally formed components, and the current collector is connected to a heat exchanger through the connector. The current collecting assembly includes the current collector and the connector, the current collector is the non-metal part, the connector is the metal part, the current collector and the connector may be respectively manufactured by an integral molding process, and the connector may be combined with the current collector during the molding process of the current collector, or may be connected with the current collector after the current collector is molded, without the need to manufacture the current collecting assembly in the form of turning as a whole, which effectively simplifies the processing process of the current collecting assembly, improves the production efficiency of the current collecting assembly, and reduces the production cost of the current collecting assembly.

In some embodiments of the first aspect, the current collector is an injection-molded component, and the current collector wraps at least a part of the connector, such that the current collector is connected to the connector. The current collector is prepared in the form of injection molding, while a conventional current collecting assembly is integrally prepared in the form of metal processing and turning. The current collecting assembly of the present application is simple and quick in manufacturing manner, reduces the processing difficulty, greatly improves the efficiency, and reduces the cost to a certain extent. Since the connector and the current collecting assembly are formed as an integrated structure, the connector and the current collecting assembly are formed in an integrated injection molding and casting manner, which is very convenient and quick to operate, and after the current collecting assembly is completely cast, the connector is also formed on the current collecting assembly, and this form makes the connection between the connector and the current collecting assembly have a better firmness of connection and better stability.

In some embodiments of the first aspect, the current collector is a thermoplastic material component.

In some embodiments of the first aspect, the thermoplastic material component is one or more of an acrylonitrile butadiene styrene (ABS) material component, a polyethylene component, a polypropylene component, a polyvinyl chloride component, a polystyrene component, a polyoxymethylene component, a polycarbonate component, and a polyamide component. The current collector that meets the requirements may be obtained by injection molding using the provided material, such that the current collector can maintain a certain strength and can save a certain cost.

In some embodiments of the first aspect, a limiting structure is disposed between the current collector and the connector, and the current collector is connected to the connector through the limiting structure. The limiting structure ensures the firmness of the connection between the connector and the current collector.

In some embodiments of the first aspect, the limiting structure includes a convex portion and a concave portion, the convex portion is disposed on one of the connector and the current collector, the concave portion is disposed on the other one of the connector and the current collector, and the convex portion is embedded into the concave portion, such that the current collector is connected to the connector. The structure in which the convex portion and the concave portion match each other is adopted, which further enhances the firmness of the connection between the connector and the current collector.

In some embodiments of the first aspect, the convex portion has a shape of one or more of a hook shape, a barb shape, and a bent shape. The shape of the convex portion may further increase the firmness of the connection.

In some embodiments of the first aspect, the concave portion is one or more of a hook-shaped notch, a barb-shaped notch, and a bent notch. The specific form of the concave portion also plays a role in further strengthening the firmness of the connection.

In some embodiments of the first aspect, the connector is annularly disposed at a port of the current collector close to the heat exchanger. When the connector is connected to the heat exchanger, the connector may be connected to the heat exchanger in the entire circumferential direction, thereby improving the stability and reliability of the connection.

In some embodiments of the first aspect, the limiting structure is evenly distributed in a circumferential direction of the connector. In this way, the connection firmness between each portion of the connector and the current collector is kept balanced.

In some embodiments of the first aspect, a material of the connector is the same as a material of the heat exchanger, or the material of the connector is one or more of aluminum, an aluminum alloy, iron, steel, or copper. The material of the connector meets the welding requirements, and the connection is realized in the form of welding, such that the connection is firmer and the sealed connection may be realized, and the form of welding is easier to operate and has good stability compared with other connection forms, and may improve the processing efficiency.

In some embodiments of the first aspect of the present application, the connector is welded to the heat exchanger. This may not only increase the firmness of the connection, but also better achieve relative sealing.

In some embodiments of the first aspect, the current collector includes:

a current collecting portion and a current transporting portion, the current collecting portion is provided with a first flow channel, the first flow channel is configured to communicate with the heat exchange channel of the heat exchanger, the current transporting portion is connected to the current collecting portion, the current transporting portion is provided with a second flow channel, and the second flow channel is in communication with the first flow channel. A pipeline form of liquid supply and liquid return is provided, and the liquid can enter each of the current collectors and each of the heat exchangers, thereby realizing an omnidirectional liquid circulation heat exchange system.

In some embodiments of the first aspect, the current transporting portion includes a tube body, the second flow channel is formed in an inner cavity of the tube body, the current collecting portion is provided with a through hole, the tube body is disposed in the through hole, and the tube body is provided with a through hole communicating with the first flow channel. The tube body is a long pipeline, which is disposed on the current collecting portion through the through hole, has a stable and reliable structure, and realizes effective communication through the through hole.

In some embodiments of the first aspect, the current transporting portion includes a first connecting joint and a second connecting joint connected to the current collecting portion, the first connecting joint is provided with a first channel, the second connecting joint is provided with a second channel, and the first channel is in communication with the second channel to form the second flow channel. The first connecting joint and the second connecting joint are simple in structure and easy to prepare, and since the first connecting joint and the second connecting joint are disposed, the front and rear current collectors may be connected through the connection of the connectors, thereby facilitating the communication of a plurality of second channels to form a main pipeline.

In some embodiments of the first aspect, the first connecting joint and the second connecting joint are connected to two opposite sides of the current collecting portion. In this way, the second channel can be formed, such that the arrangement is simpler and more convenient.

In some embodiments of the first aspect, the current collecting portion includes a main body portion and a spacing portion, the main body portion is provided with the first flow channel, the spacing portion is disposed in the first flow channel and spaces the first flow channel into a first flow section and a second flow section, the spacing portion is provided with a flow-through hole, and the first flow section and the second flow section are connected through the flow-through hole. The first flow section and the second flow section are disposed, and the shapes of the first flow section and the second flow section may be set as required, such that the second flow channel and the heat exchange channel can be conveniently communicated with each other.

In a second aspect, the present application further provides a preparation process, applied to preparing the current collecting assembly provided by any one of the above embodiments, including the following steps:
placing the connector in a first mold for molding;
placing the molded connector in a second mold; and
casting a molten liquid into the second mold, where the molten liquid wraps at least a part of the connector, and performing demolding after the molten liquid is solidified to form the current collector. The preparation method is simple and easy to operate, which reduces the difficulty in preparing the current collecting assembly and saves the cost.

In a third aspect, the present application further provides a heat exchange apparatus, including a heat exchanger and the current collecting assembly provided in any one of the above embodiments, where the heat exchanger is connected to the connector. The difficulty in preparing the heat exchange apparatus may be reduced and the cost may be saved.

In a fourth aspect, the present application further provides a battery, including the heat exchange apparatus provided in the above embodiments. After the battery is provided with the heat exchange apparatus in the present application, the manufacturing cost of the battery is also reduced, and the difficulty in manufacturing the battery is reduced.

In a fifth aspect, the present application further provides an electric device, including the battery provided in the above embodiments. The difficulty in manufacturing the electric device is reduced, and the manufacturing cost is reduced.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### BRIEF DESCRIPTION OF THE DRAWINGS

Various other advantages and benefits will become clear to a person of ordinary skill in the art upon reading the detailed description of the preferred implementations below. The accompanying drawings are used only for the purpose of illustrating the preferred implementations and are not to be construed as limitations on the present application. Moreover, the same reference numerals are used to denote the same components throughout the accompanying drawings. In the accompanying drawings:
FIG. 1 is a schematic structural diagram of a vehicle according to some embodiments of the present application;
FIG. 2 is a perspective structural schematic diagram of a current collecting assembly according to some embodiments of the present application;
FIG. 3 is a top view of the current collecting assembly in FIG. 2;
FIG. 4 is a bottom view of the current collecting assembly in FIG. 2;
FIG. 5 is a left view of the current collecting assembly in FIG. 2;
FIG. 6 is a right view of the current collecting assembly in FIG. 2;
FIG. 7 is a front view of the current collecting assembly in FIG. 2;
FIG. 8 is a rear view of the current collecting assembly in FIG. 2;
FIG. 9 is a perspective structural schematic diagram of a connector according to some embodiments of the present application;
FIG. 10 is a perspective structural schematic diagram of a battery according to some other embodiments of the present application;
FIG. 11 is a perspective structural schematic diagram of a connector according to some other embodiments of the present application; and
FIG. 12 is a perspective structural schematic diagram of a connector according to still other embodiments of the present application.

Reference numerals in specific implementations are as follows:
1000. vehicle;
100, battery; 200, controller; 300, motor;
10, current collecting assembly; 11, current collector; 12, connector;
111, current collecting portion; 112, current transporting portion; 113, flow-through hole; 114, groove body; 115, liquid inlet portion; 116, liquid outlet portion; 117, second flow channel; 118, convex portion; 119, concave portion;
20, heat exchanger.

### DETAILED DESCRIPTION OF PREFERRED EMBODIMENTS

Embodiments of the technical solutions of the present application are described in detail below with reference to the drawings. The following embodiments are only used to more clearly illustrate the technical solutions of the present application, and thus are used as examples only, and are not intended to limit the protection range of the present application.

Unless otherwise defined, all technical and scientific terms used herein have the same meaning as commonly understood by those skilled in the art to which the present application belongs. The terms used in the specification of the present application herein are merely for the purpose of describing specific embodiments and are not intended to limit the present application. The terms "include", "be provided with", and any other variants thereof in the specification, claims, and accompanying drawings of the present application are intended to cover a non-exclusive inclusion.

In the description of the embodiments of the present application, the technical terms "first", "second", and the like are used only for distinguishing between different objects, but cannot be construed to indicate or imply relative importance or implicitly indicate the number, specific order, or primary/secondary relationship of indicated technical features. In the description of the embodiments of the present application, "a plurality of" means two or more unless specifically defined otherwise.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

In the description of the embodiments of the present application, the term "and/or" is only an associative relationship for describing associated objects, indicating that three relationships may be present. For example, A and/or B may indicate the following three cases: presence of only A, presence of both A and B, and presence of only B. In addition, the character "/" herein generally indicates that associated objects are in a "or" relationship.

In the description of the embodiments of the present application, the term "a plurality of" means two or more (including two), and similarly, the term "a plurality of groups" means two or more groups (including two groups), and the term "a plurality of pieces" means two or more pieces (including two pieces).

In the description of the embodiments of the present application, an orientation or positional relationship indicated by technical terms "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", "circumferential", and the like is an orientation or positional relationship shown based on the accompanying drawings, is intended only to facilitate the description of the embodiments of the present application and simplification of the description rather than indicating or implying that an apparatus or an element indicated must have a specific orientation, or be constructed and operated in a specific orientation, and therefore is not intended to be construed as a limitation to the embodiments of the present application.

In the description of the embodiments of the present application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, any may refer to a direct connection, an indirect connection via an intermediate medium, or an internal communication between two elements or interaction between two elements. A person of ordinary skill in the art may understand the specific meanings of the above terms in the embodiments of the present application according to specific situations.

At present, in view of the development of the market, the use of batteries is becoming increasingly more widespread. Batteries are used not only in energy storage power systems such as hydropower, thermal power, wind power, and solar power plants, but also in electric tools such as electric bicycles, electric motorcycles, and electric vehicles, as well as military equipment, aerospace, and many other fields. As the application field of secondary batteries continues to expand, a market demand for batteries continues to increase.

To meet different power requirements, the battery may include a plurality of cells, where the plurality of cells may be connected in series, in parallel, or in hybrid, and the hybrid refers to a mixture of series and parallel. Optionally, the plurality of battery cells may first form a battery module through series connection, parallel connection, or parallel-series connection, and then a plurality of battery modules form the battery through series connection, parallel connection, or parallel-series connection. That is, the plurality of battery cells may directly constitute the battery, or may constitute the battery module first, and the battery module constitutes the battery. Then, the battery is further disposed in an electric device to supply electrical energy to the electric device.

The battery cell may include, but is not limited to, a lithium-ion secondary battery, a lithium-ion primary battery, a lithium-sulfur battery, a sodium-lithium ion battery, a sodium-ion battery, a magnesium-ion battery, or the like, which is not limited in the embodiments of the present application. The battery cell may be in a shape of a cylinder, a flat body, a cuboid, or the like, which is not limited in the embodiments of the present application. The battery cells are generally divided into three types in terms of packaging manner: cylindrical battery cells, square battery cells, and pouch battery cells.

For batteries with any shape or connected in any form, during the use of the batteries, the battery cells will generate heat, and if the heat is too high, the performance and service life of the batteries will be adversely affected, and similarly, in a low temperature environment, if the temperature of the batteries is too low, the performance and service life of the batteries will also be adversely affected. In the related art, a heat exchange apparatus is usually disposed inside the battery to control the temperature of the battery cells in the battery.

The heat exchange apparatus usually uses a heat exchange medium as a heat exchange carrier, and uses a liquid pump and a circulation pipeline to complete the flow of the heat exchange medium inside the battery, which is divided into a direct contact heat exchange mode and an indirect contact heat exchange mode. The direct contact heat exchange mode is to directly immerse a battery pack in the heat exchange medium. The indirect contact heat exchange mode is that the heat exchanger directly contacts the battery cell or the battery module, such that the heat exchange medium in the heat exchanger absorbs heat of the battery cell or transfers heat to the battery cell.

During use, for example, the heat exchange medium flows through the heat exchanger, thereby taking away heat from the battery cell or transferring heat to the battery cell, so as to control the temperature of the battery cell within a suitable range.

During an actual operation, the heat exchanger is usually disposed between two adjacent battery cells or between two adjacent battery modules, which is beneficial to heat transfer of the battery cells. Therefore, based on this situation, a plurality of heat exchangers will be used, and it is necessary to provide liquid supply and liquid return channels for the plurality of heat exchangers at the same time, and in this case, a current collecting assembly is required. Therefore, the heat exchange apparatus generally includes a heat exchanger, a current collecting assembly, a liquid pump, and the like.

In the related art, the current collecting assembly is usually made of a metal profile, and the metal profile is generally of a long strip structure, and needs to be cut into individual units with a required length, and then the individual units are turned. The processing difficulty in this form is high, which not only greatly reduces the working efficiency, but also causes a large cost.

Based on the above considerations, the embodiments of the present application provide a current collecting assembly to reduce the processing difficulty to a certain extent and to appropriately reduce the processing cost.

The current collecting assembly provided in the embodiment of the present application includes a current collector and a connector, the current collector is a non-metal part, the connector is a metal part, the current collector and the connector may be prepared by an integral forming process, and the connector may be combined with the current collector during the molding process of the current collector, or may be connected with the current collector after the current collector is molded, without the need to manufacture the current collecting assembly in the form of turning as a whole, which effectively simplifies the processing process of the current collecting assembly, improves the production efficiency of the current collecting assembly, and reduces the production cost of the current collecting assembly.

The above current collecting assembly may be applied to various apparatuses having a fluid conveying function, such as a heat exchange apparatus and a water supply apparatus. The following uses an example in which the current collecting assembly is applied to a heat exchange apparatus in a battery for description.

The battery disclosed in the embodiment of the present application may be applied to an electric device using a battery as a power source. The electric device may be, but is not limited to, a mobile phone, a tablet computer, a notebook computer, an electric toy, an electric tool, a battery-powered vehicle, an electric vehicle, a ship, a spacecraft, and the like. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

For ease of description, the following embodiments are described by using an example in which an electric device in the embodiment of the present application is a vehicle 1000.

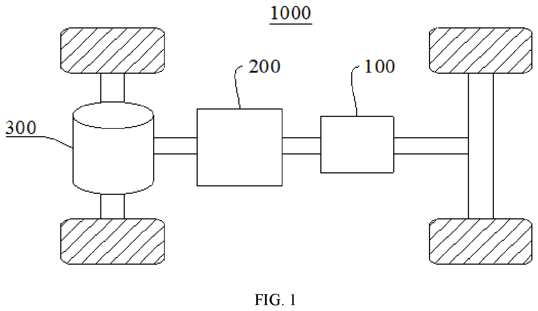

Referring to FIG. 1, FIG. 1 is a perspective structural schematic diagram of a vehicle 1000 according to some embodiments of the present application. The vehicle 1000 may be a fuel vehicle, a gas vehicle, or a new energy vehicle, and the new energy vehicle may be a battery electric vehicle, a hybrid vehicle, or a range-extended electric vehicle. Inside the vehicle 1000, a battery 100 is provided, which may be provided at the bottom, head, or tail of the vehicle 1000. The battery 100 may be configured to power the vehicle 1000, for example, the battery 100 may be used as an operating power source of the vehicle 1000. The vehicle 1000 may further include a controller 200 and a motor 300, where the controller 200 is configured to control the battery 100 to power the motor 300, for example, for a working power requirement of the vehicle 1000 during starting, navigating, and driving.

In some embodiments of the present application, the battery 100 may be used not only as the operating power source of the vehicle 1000, but also as a driving power source of the vehicle 1000, instead of or partially instead of fuel or natural gas to provide driving power for the vehicle 1000.

In some embodiments of the present application, the battery 100 may include a case, a battery cell, and a heat exchange apparatus, and the battery cell is accommodated in the case. Here, the case is configured to provide an accommodation space for the battery cell, and the case may have various structures.

The battery cell may be a secondary battery or a primary battery, where the secondary battery refers to a battery cell that may be continuously used by activating an active material by means of charging the battery cell after the battery cell is discharged. The primary battery refers to a battery cell that may not be continuously used by activating an active material by means of charging the battery cell after the electric energy of the battery cell is depleted. The battery cell may also be a lithium-ion battery, a sodium-ion battery, a sodium-lithium ion battery, a lithium metal battery, a sodium metal battery, a lithium-sulfur battery, a magnesium-ion battery, a nickel-hydrogen battery, a nickel-cadmium battery, a lead storage battery, or the like, which is not limited herein. The battery cell may be a cylindrical battery cell, a prismatic battery cell, a pouch battery cell, or a battery cell in another shape, and the prismatic battery cell includes a rectangular case battery cell, a blade-type battery cell, and a polygonal prism battery, for example, a hexagonal battery cell, and the like, which is not particularly limited in the present application.

In some embodiments, the heat exchange apparatus may include a heat exchanger 20, a current collecting assembly 10, a pump body for driving flow, and the like.

The current collecting assembly 10 can connect a plurality of heat exchangers 20 into an interconnected structure, which facilitates liquid supply and liquid return, such that the plurality of heat exchangers 20 form an integrated heat exchange apparatus. The current collecting assembly 10 is provided with a current collecting channel, and the current collecting channel is configured to communicate with the heat exchange channel of the heat exchanger 20.

The heat exchanger 20 is a component used for the battery cells or battery modules in the battery 100 to be in contact with each other for heat exchange. It may be understood that there is a heat exchange channel inside the heat exchanger 20, and the heat exchange medium may circulate in the heat exchange channel to take away heat generated by the battery cell or transfer heat to the battery cell. There may be a plurality of heat exchangers 20, and two adjacent heat exchangers 20 may be connected by the above current collecting assembly 10, such that the heat exchange channels of the two adjacent heat exchangers 20 are communicated.

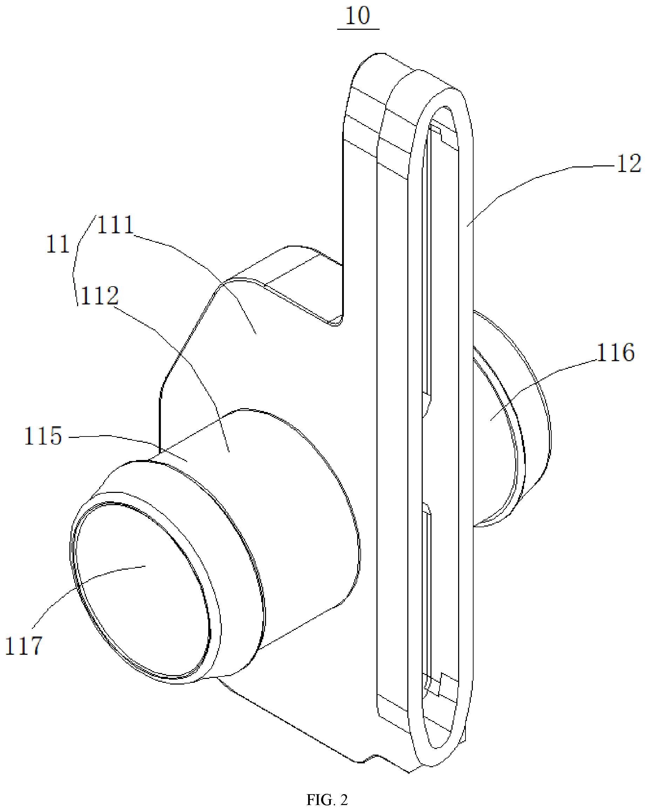

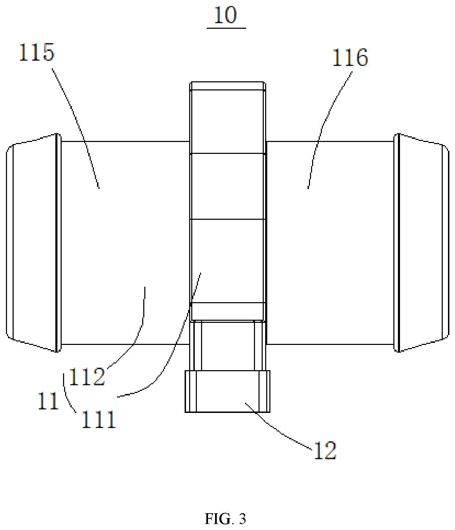

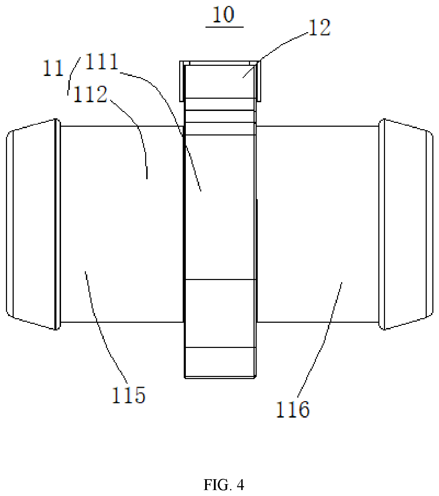

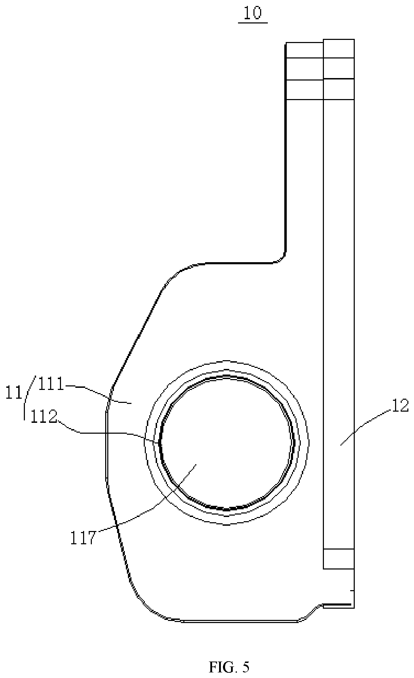

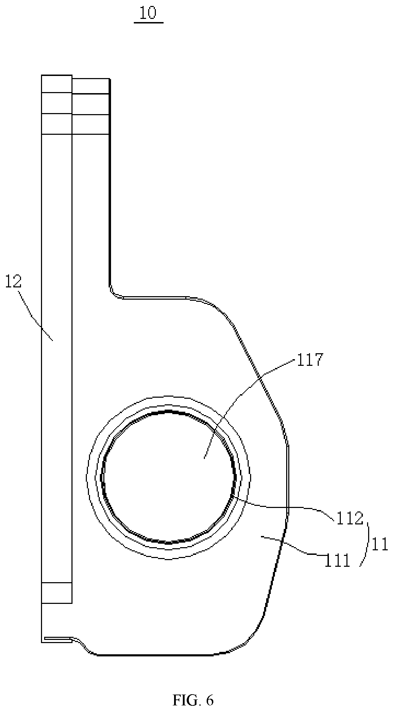

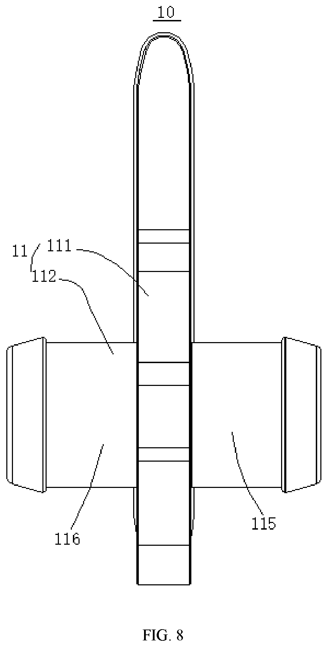

According to some embodiments of the present application, referring to FIGS. 2 to 8 together, a current collecting assembly 10 is provided. The current collecting assembly 10 includes a current collector 11 and a connector 12, the current collector 11 is a non-metal part, the connector 12 is a metal part, the current collector 11 and the connector 12 are integrally formed components, and the current collector 11 is connected to the heat exchanger 20 through the connector 12.

The current collector 11 is a main body component of the current collecting assembly 10. It may be understood that a current collecting channel is formed inside the current collector 11, and the current collecting channel is communicated with the heat exchange channel of the heat exchanger 20 to realize a liquid supply function and a liquid return function of the heat exchange medium. The current collector 11 is the non-metal part, that is, the current collector 11 is made of a non-metal material, and the non-metal material may be, but is not limited to, plastic, ceramic, glass, or the like. The current collector 11 is prepared by an integral forming process. For example, in the case where the material of the current collector 11 is plastic, the current collector 11 may be prepared by an injection molding process.

The connector 12 is a component configured to connect the current collector 11 and the heat exchanger 20. It may be understood that a communication channel is formed inside the connector 12, and in the case where the connector 12 is connected to the current collector 11 and the heat exchanger 20, the current collecting channel of the current collector 11 is communicated with the heat exchange channel of the heat exchanger 20 through the communication channel of the connector 12, such that the heat exchange medium can flow from the heat exchange channel of the heat exchanger 20 to the current collecting channel of the current collector 11 through the connecting channel of the connector 12 or flow from the current collecting channel of the current collector 11 to the heat exchange channel of the heat exchanger 20 through the connecting channel of the connector 12.

Generally, in order to improve the heat exchange efficiency, the heat exchanger 20 is usually made of a metal material with a good heat conduction effect, and since the connector 12 provided in the embodiment of the present application is configured to be connected to the heat exchanger 20, preferably welded, the connector 12 provided in the embodiment of the present application is a metal part, that is, the connector 12 is made of a metal material, and the metal material may be, but is not limited to, aluminum, an aluminum alloy, copper, iron, steel, stainless steel, and the like. The materials of the connector 12 and the heat exchanger 20 may be the same or different.

The current collector 11 is connected to the heat exchanger 20 through the connector 12. In other words, the connector 12 is connected between the current collector 11 and the heat exchanger 20. In some embodiments, the current collector 11 wraps at least a part of the connector 12 during the molding process, such that the current collector 11 and the connector 12 are combined together after the current collector 11 is molded. In some other embodiments, the current collector 11 and the connector 12 are connected together after being independently formed, and the connection mode between the current collector 11 and the connector 12 may be, but is not limited to, fastening, bonding, or the like. The connection mode between the connector 12 and the heat exchanger 20 may be, but is not limited to, welding, fastening, bonding, and the like.

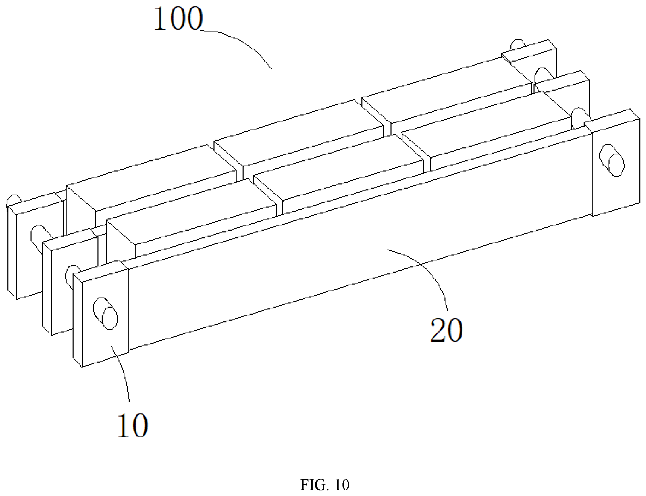

Referring to FIG. 10, in some embodiments, the heat exchange channel of the heat exchanger 20 is provided with a liquid inlet and a liquid outlet, the current collector 11 is connected to the liquid inlet of the heat exchanger 20 through the connector 12, and in the case where there are a plurality of heat exchangers 20, there are also a plurality of current collecting assemblies 10, and the current collectors 11 of the plurality of current collecting assemblies 10 are sequentially communicated.

Continuously referring to FIG. 10, in some other embodiments, the heat exchange channel of the heat exchanger 20 is provided with a liquid inlet and a liquid outlet, the current collector 11 is connected to the liquid outlet of the heat exchanger 20 through the connector 12, and in the case where there are a plurality of heat exchangers 20, there are also a plurality of current collecting assemblies 10, and the current collectors 11 of the plurality of current collecting assemblies 10 are sequentially communicated.

Continuously referring to FIG. 10, in some other embodiments, the heat exchange channel of the heat exchanger 20 is provided with a liquid inlet and a liquid outlet, one current collector 11 is connected to the liquid inlet of the heat exchanger 20 through one connector 12, and another current collector 11 is connected to the liquid outlet of the heat exchanger 20 through another connector 12. In a case where there are a plurality of heat exchangers 20, there are also a plurality of current collecting assemblies 10. The plurality of current collectors 11 connected to the liquid inlet of the heat exchanger 20 are sequentially communicated, and the plurality of current collectors 11 connected to the liquid outlet of the heat exchanger 20 are sequentially communicated.

The current collecting assembly 10 provided in the embodiment of the present application includes the current collector 11 and the connector 12, the current collector 11 is the non-metal part, the connector 12 is the metal part, the current collector 11 and the connector 12 may be respectively manufactured by an integral molding process, and the connector 12 may be combined with the current collector 11 during the molding process of the current collector 11, or may be connected with the current collector 11 after the current collector 11 is molded, without the need to manufacture the current collecting assembly 10 in the form of turning as a whole, which effectively simplifies the processing process of the current collecting assembly 10, improves the production efficiency of the current collecting assembly 10, and reduces the production cost of the current collecting assembly 10.

In some embodiments, the current collector 11 may be a plastic part, the current collector 11 is an injection-molded component, and the current collector 11 wraps at least a part of the connector 12, such that the current collector 11 is connected to the connector 12.

Specifically, the current collector 11 provided in the present embodiment is cast and formed in the form of injection molding, and the connector 12 may be partially immersed into a casting solution selectively during casting of the current collector 11 to be formed and then connected. The injection molding of the current collector 11 is generally implemented by means of a mold, the shape of the mold may be designed in advance according to the shape of the current collector 11 that needs to be cast, then the connector 12 is disposed in the mold, then a thermoplastic material is poured into the mold to fill the interior of the mold, and after cooling and molding, the mold is opened and demolded, such that the current collecting assembly 10 may be formed, and a current collecting channel structure on the current collector 11 may be formed.

The pouring of the current collector 11 needs to be realized by means of a mold, specifically including: casting a thermoplastic material into the mold, and then waiting for the mold to cool. Since the connector 12 and the current collector 11 are of an integrated structure, the connector 12 and the current collector 11 may be in an integrally cast form selectively. Specifically, the current collector 11 is cast and formed by the mold, and the connector 12 is pre-embedded into the mold to be cast into an integrated structure with the current collector 11.

The mold may be a dedicated mold for casting the thermoplastic material. The shape of an inner cavity of the mold may be designed according to the shape of the current collector 11. The connector 12 is pre-embedded into the mold, that is, the connector 12 is first positioned in the inner cavity of the mold before casting, and during casting, the cast thermoplastic material and the connector 12 may form an integrated structure.

It should be noted that the current collector 11 wraps at least a part of the connector 12, that is, a part of the connector 12 needs to be exposed for being connected to the heat exchanger 20. The pre-embedded position of the connector 12 in the mold needs to be positioned according to requirements, and cannot be submerged by the thermoplastic material, and the connector can be connected to the heat exchanger 20 only when the connector has an exposed portion on the surface of the current collector 11 at least after casting and molding. Specifically, after the casting is completed, a part of the connector 12 is cast into the current collector 11, and the other part of the connector 12 is exposed outside the current collector 11, and a boss or a protruding stepped structure is formed on the surface of the current collector 11, such that the connector 12 is conveniently connected to the heat exchanger 20.

The connector 12 may be pre-embedded and positioned in the mold by using some supporting structures, and the supporting structures may be made of the same material as the current collector 11, but need to be in a cooling and molding state, such that the connector 12 has a certain strength to meet the supporting requirements. Specifically, the support structures may be rod-shaped structures, ring-shaped structures, hook-shaped structures, or a combination of the plurality of structures, such that the connector 12 may be positioned in the mold in a suspended state, and is not in contact with the inner wall of the mold as much as possible, or may be in contact with the inner wall of the mold when required. The supporting structures can maintain the connector 12 in a stable state during casting.

Injection molding is a method for producing and shaping products, and usually uses thermoplastic materials and the like. Injection molding may also be divided into injection molding and die casting. Thermoplastic plastics or thermosetting materials are made into plastic products of various shapes by using plastic molding molds, and injection molding is realized by an injection molding machine and a mold.

After the injection molding of the current collecting assembly 10, the connector 12 may be connected to the heat exchanger 20 during use, and after the connection, the current collecting channel of the current collector 11 is communicated with the heat exchange channel of the heat exchanger 20 to form a diversion channel.

The current collector 11 provided by the present application is prepared in the form of injection molding, while a conventional current collecting assembly 10 is integrally prepared in the form of metal processing and turning. The current collecting assembly 10 of the present application is simple and quick in manufacturing manner, reduces the processing difficulty, greatly improves the efficiency, and reduces the cost to a certain extent. Since the connector 12 and the current collector 11 are formed as an integrated structure, the connector 12 and the current collector 11 are formed in an integrated injection molding and casting manner, which is very convenient and quick to operate, and after the current collector 11 is completely cast, the connector 12 is also formed on the current collector 11, and this form makes the connection between the connector 12 and the current collector 11 have a better firmness of connection and better stability.

In some embodiments, the current collector 11 may be a thermoplastic material component. The thermoplastic material may be specifically one or more of an ABS material, polyethylene, polypropylene, polyvinyl chloride, polystyrene, polyoxymethylene, polycarbonate, and polyamide.

The thermoplastic material refers to a material that can be deformed by flowing when heated and may maintain a certain shape after being cooled. The thermoplastic material will melt when heated and flow to the mold to be cooled and formed, and the plastic material which will melt when heated will be heated and cooled to produce a solid-liquid or liquid-solid reversible change. In this way, the material forming the current collector 11 may be repeatedly used, thereby further saving the cost.

Optionally, the thermoplastic material may be selected as an acrylonitrile butadiene styrene plastic (ABS) copolymer, and the ABS material is a thermoplastic polymer structural material that has high strength, good toughness, and is easy to process and form. The ABS material has excellent mechanical properties and excellent impact strength, and may be used at extremely low temperatures; the ABS material has excellent wear resistance, good dimensional stability, and oil resistance.

The present embodiment provides a material that may be used for the current collector 11, and the current collector 11 that meets the requirements may be obtained by injection molding using the provided material, such that the current collector 11 can maintain a certain strength and can save a certain cost.

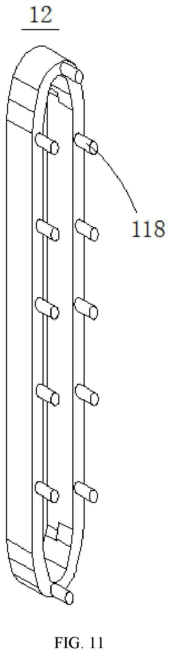

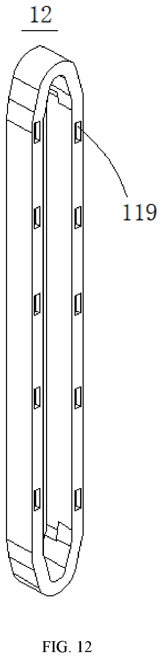

Referring to FIG. 11 and FIG. 12, in some embodiments, a limiting structure is disposed between the current collector 11 and the connector 12, and the current collector 11 is connected to the connector 12 through the limiting structure.

Specifically, the limiting structure is a structure that prevents the two from being separated and enhances the firmness between the two. After the limiting structure is disposed, a concave-convex fitting structure is formed between the limiting structure and the current collector 11, which is equivalent to a clamping position, such that the two can be prevented from being separated.

The limiting structure provided in this embodiment ensures the firmness of the connection between the connector 12 and the current collector 11.

In some embodiments, referring to FIG. 11 and FIG. 12, the limiting structure includes a convex portion 118 and a concave portion 119, the convex portion 118 is disposed on one of the connector 12 and the current collector 11, the concave portion 119 is disposed on the other one of the connector 12 and the current collector 11, and the convex portion 118 is embedded into the concave portion 119, such that the current collector 11 is connected to the connector 12.

Specifically, the convex portion 118 is a portion protruding from one of the outer surface of the connector 12 and the inner surface of the current collector 11, and the concave portion 119 is a portion recessed from the other one of the outer surface of the connector 12 and the inner surface of the current collector 11. In some embodiments, the convex portion 118 is convexly disposed on an outer surface of the connector 12, and the concave portion 119 is concavely disposed on an inner surface of the current collector 11. In some embodiments, the current collector 11 wraps at least part of the connector 12 during the molding process, such that the current collector 11 and the connector 12 are combined together after the current collector 11 is molded, and in the above process, the convex portion 118 is embedded into the current collector 11, such that the concave portion 119 is formed on the inner surface of the current collector after the current collector 11 is molded, thereby combining the current collector 11 and the connector 12 together.

The structure in which the convex portion 118 and the concave portion 119 match each other further enhances the firmness of the connection between the connector 12 and the current collector 11.

According to an embodiment of the present application, the shape of the convex portion 118 may be one or more of a hook shape, a barb shape, and a bent shape.

Specifically, the hook shape may adopt a barb-shaped structure. Alternatively, the shape may be a barb-shape or a bent shape. The barb-shape is of an inverted pointed structure, with an effect being the same as that of the hook structure. The bent shape may be an L-shaped bend, a T-shaped bend, an S-shaped bend, a continuous wave shape, or the like.

The shape of the convex portion 118 provided in this embodiment may further increase the firmness of the connection.

In some embodiments, the concave portion 119 is one or more of a hook-shaped notch, a barb-shaped notch, and a bent-shaped notch. The shape of the concave portion 119 is adapted to the shape of the convex portion 118, and the specific form of the structure of the concave portion 119 provided in this embodiment also plays a role in further enhancing the firmness of the connection.

In some embodiments, referring to FIG. 2, the connector 12 is annularly disposed at a port of the current collector 11 close to the heat exchanger 20.

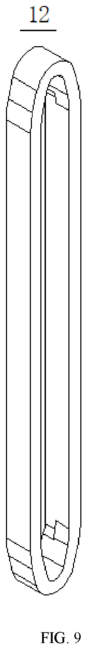

In other words, as shown in FIG. 9, the connector 12 is of an annular structure, and the annular structure may be, but is not limited to, a circular annular structure, an elliptical annular structure, a square annular structure, a triangular annular structure, or the like. The shape of the annular structure may be specifically determined according to the shape of the port of the heat exchanger 20 close to the heat exchanger 20.

In order to present the connector 12 in a ring shape in a certain section, a plane connector 12 is set to be cut off on the plane, and the connector presents a ring shape on the plane, the connector 12 has a certain thickness in a direction perpendicular to the plane, and the ring-shaped body presented by the connector 12 also has a certain width.

The effect of setting the connector 12 to be an annular structure is that when the connector 12 is connected to the heat exchanger 20, the connector may be connected to the heat exchanger 20 in the entire circumferential direction, thereby improving the stability and reliability of the connection.

It should be noted that the current collecting channel is disposed on the current collector 11 and is disposed at the port of the current collector 11 close to the heat exchanger 20, and when the connector 12 is annular, the current collecting channel may be located in the annular structure, that is, the connector 12 is disposed around the opening of the current collecting channel, such that one side of the connector 12 is sealed because the connector is cast into the current collector 11, and the other side of the connector 12 may be connected to the heat exchanger 20, and when this side is also connected in a sealed manner, the sealed conduction between the current collecting channel and the heat exchange channel of the heat exchanger 20 may be realized, and the diversion channel is formed. Specifically, the connector 12 and the heat exchanger 20 may be connected in a sealed manner, specifically, the connector and the heat exchanger may be welded and sealed in a circumferential direction, or a sealing rubber gasket or a sealing rubber ring may be further disposed between the connector 12 and the heat exchanger 20 for extrusion sealing.

Specifically, when the connector 12 is annular, the connector 12 and the heat exchanger 20 may be connected by welding, and a welding position is on the entire circumference of the connector 12 in the annular direction, which may effectively realize the sealing connection.

In some embodiments, referring to FIG. 11 and FIG. 12, the limiting structure is evenly distributed in the circumferential direction of the connector 12.

Specifically, even distribution may be that every two adjacent limiting structures are equally spaced in the circumferential direction of the connector 12, such that the connection firmness between each portion of the connector 12 and the current collector 11 is kept balanced.

In some embodiments, a material of the connector 12 is the same as a material of the heat exchanger 20, or the material of the connector 12 is one or more of aluminum, an aluminum alloy, iron, steel, or copper.

Specifically, when the connector 12 is connected to the heat exchanger 20, the collecting channel and the heat exchange channel needs to be connected, and needs to be connected in a sealed manner, that is, the heat exchange medium cannot flow out or leak out, such that the preferred connection form is welding, so the material of the connector 12 is optionally the same as the material of the heat exchanger 20.

Generally, the heat exchanger 20 is made of metal, such that the connector 12 may be made of the same metal as the heat exchanger 20, and then connected by welding. Optionally, the welding is in the form of brazing. During brazing, the metal to be welded is not melted, but the welding material (welding wire) is melted and closely adheres to the material to be welded, and the two materials are connected together by the force between the atoms of the two materials.

Alternatively, the material of the connector 12 is one or more of aluminum, an aluminum alloy, iron, steel, or copper. In order to increase the thermal conductivity, the heat exchanger 20 is often made of a metal material with a better thermal conductivity effect, and aluminum or aluminum alloy is generally the preferred material of the heat exchanger 20 due to low price and ease of processing, such that the material of the connector 12 provided in this embodiment may be aluminum or aluminum alloy, or may also be one or more of iron, steel or copper.

The material of the connector 12 provided in this embodiment meets the welding requirements, and the connection is achieved in a welding manner, such that the connection is firmer and a sealed connection may be achieved, and the welding manner is easier to operate and has good stability compared with other connection manners, and may improve the processing efficiency.

Therefore, the connector 12 and the heat exchanger 20 are welded to each other, which may not only increase the firmness of the connection, but also better realize the relative sealing.

Referring to FIGS. 2 to 8, in some embodiments, the current collector 11 includes a current collecting portion 111 and a current transporting portion 112. The first flow channel is disposed on the current collecting portion 111, and the first flow channel is configured to communicate with the heat exchange channel of the heat exchanger 20. The current transporting portion 112 is connected to the current collecting portion 111, the current transporting portion 112 is provided with a second flow channel 117, and the second flow channel 117 is in communication with the first flow channel.

The first flow channel and the second flow channel 117 form the above-mentioned manifold channel.

Specifically, the current collector 11 needs to have two functions, firstly, the current collector needs to be provided with a main pipeline for supplying liquid and returning liquid, and also needs to have a function of providing a heat exchange medium to the corresponding heat exchanger 20, that is, the current collector has a branch capable of providing a heat exchange medium to the corresponding heat exchanger 20.

In order to realize the above function, the current collector 11 provided by the present application includes a current collecting portion 111 and a current transporting portion 112. The current collecting portion 111 may be a plate-shaped structure, and the specific shape thereof may be determined according to a spatial position where the current collecting portion is to be disposed, and the current collecting portion has a certain thickness. The current collecting portion 111 is configured to form a first flow channel. The current transporting portion 112 is intended to provide the main pipeline.

Specifically, the liquid flows into the second flow channel 117, and then enters the first flow channel to enter the heat exchange channel in the heat exchanger 20. The second flow channels 117 among the plurality of current collectors 11 are connected end to end to form the main pipeline for liquid supply, and at the other end of the heat exchanger 20, the second flow channels 117 of the plurality of current collectors 11 are connected end to end to form a main pipeline for liquid return. The liquid passing through the heat exchanger 20 flows into the second flow channel 117 from the plurality of first flow channels at the other end, to realize liquid return.

Referring to FIG. 10, during use, the plurality of heat exchangers 20 are usually arranged side by side, and when the heat exchange channel is communicated with both ends of the heat exchanger 20 in the length direction, both ends of each heat exchanger 20 are connected to one of the current collecting assemblies 10, and when connected, the current collecting assembly 10 is connected to the port of the heat exchange channel to realize the conduction between the first flow channel and the heat exchange channel. Two adjacent current collecting assemblies 10 located at the same end of the heat exchanger 20 are also in communication with each other, that is, the second flow channel 117 of the previous current collecting assembly 10 is in communication with the second flow channel 117 of the next current collecting assembly 10. In such an arrangement, the plurality of heat exchangers 20 may be communicated together.

Alternatively, when the two ports of the heat exchange channel may be formed in the same side end of the heat exchanger 20, one fluid collecting assembly 10 is disposed at each of the two ports, that is, the liquid inlet current collecting assembly 10 and the liquid outlet current collecting assembly 10 are located at the same end of the heat exchanger 20.

In specific use, taking the case where the heat exchange channel is in communication with both ends of the heat exchanger 20 as an example, the plurality of current collecting assemblies 10 located at one end of the heat exchanger 20 may be selected to be in a liquid inlet form, and the plurality of current collecting assemblies 10 located at the other end of the heat exchanger 20 may be selected to be in a liquid outlet form. The specific flow direction is that the heat exchange medium enters the second flow channels 117 of the plurality of current collecting assemblies 10 at the same end that are in communication with each other, and each of the current collecting assemblies 10 obtains the heat exchange medium and then flows into the heat exchange channel of the corresponding heat exchanger 20 through the respective first flow channel, such that the heat exchange medium can pass through the plurality of heat exchangers 20, and after heat exchange of the battery 100, flow out from the first flow channels of the plurality of current collecting assemblies 10 at the other end and then flow out through the second flow channel 117 to achieve circulation.

Therefore, the effect of this embodiment is that a pipeline form of liquid supply and liquid return is provided, and the liquid can enter each of the current collectors 11 and each of the heat exchangers 20, thereby realizing an omnidirectional liquid circulation heat exchange system.

Referring to FIG. 2, in some embodiments, the current transporting portion 112 includes a tube body, the second flow channel 117 is formed in an inner cavity of the tube body, the current collecting portion 111 is provided with a through hole, the tube body is disposed in the through hole, and the tube body is provided with a through hole communicating with the first flow channel.

Specifically, both ends of the tube body are respectively a liquid inlet portion 115 and a liquid outlet portion 116. A hole diameter of the through hole is equal to or slightly larger than an outer diameter of the tube body, the lengths of the tube body exposed on both sides of the through hole may be the same or not much different, a first flow channel is disposed inside the current collecting portion 111, and one end of the first flow channel is communicated with the inside of the tube body through the through hole. The other end of the first flow channel is configured to communicate with the heat exchange channel of the heat exchanger 20, such that the communication can be realized after the connection.

The effect of this embodiment is that the tube body is a long pipeline, which is disposed on the current collecting portion 111 through the through hole, the structure is stable and reliable, and effective communication is achieved through the through hole.

In some other embodiments, the current transporting portion 112 includes a first connector and a second connector connected to the current collecting portion 111, the first connecting joint is provided with a first channel, the second connecting joint is provided with a second channel, and the first channel is in communication with the second channel to form the second flow channel 117.

Specifically, the current transporting portion 112 may not be a long integral pipe, but includes a first connecting joint and a second connecting joint, both of which are of hollow structures, at this time, a through hole may also be formed in the current collecting portion 111, the first connecting joint and the second connecting joint are connected on two sides of the through hole, and the first channel and the second channel may form the second flow channel 117 together with the through hole, or the first channel and the second channel are directly connected to form the second flow channel 117.

The first flow channel may be communicated with the through hole to achieve conduction, or the first flow channel may be directly communicated with the first channel or the second channel.

The effect of this embodiment is that the first connecting joint and the second connecting joint are simple in structure and easy to prepare, and since the first connecting joint and the second connecting joint are disposed, the two front and rear current collectors 11 may be connected by the connection of the connecting joints, thereby facilitating the communication of the plurality of second channels to form the main pipeline.

In some embodiments, the first connecting joint and the second connecting joint are connected to two opposite sides of the current collecting portion 111. This facilitates the arrangement of the first connecting joint and the second connecting joint, facilitates the connection, and can well form the second flow channel 117.

For the specific forms of the current transporting portion 112 provided in the above two embodiments, during specific use, as shown in FIG. 10, the first end of the heat exchanger 20 is connected to the current collecting assembly 10, and since the plurality of heat exchangers 20 are arranged side by side, one current collecting assembly 10 is disposed at the first end of each of the heat exchangers 20, and then the second flow channels 117 of two adjacent current collecting assemblies 10 located on the same end side of the heat exchanger 20 are connected to each other to achieve sealed communication. That is, the liquid inlet portion 115 (or the first connecting joint) of the current transporting portion 112 of the first current collecting assembly 10 is configured to be connected to a water supply system, and the liquid outlet portion 116 (or the second connecting joint) of the current transporting portion 112 of the last current collecting assembly 10 may be in a closed state.

The second end of the heat exchanger 20 is also connected to the current collecting assembly 10, the current collecting assembly 10 at the second end and the current collecting assembly 10 at the first end adopt the same connection form, the first flow channel of the current collecting assembly 10 at the second end is configured to discharge a liquid, the liquid at this time is a backflow liquid after heat exchange, and the backflow liquid is collected to the second flow channels 117 communicated with each other at the second end and finally flows back. Then the liquid flows through the heat exchanger again, and after being cooled by the heat exchanger, the liquid flows in again for further cooling.

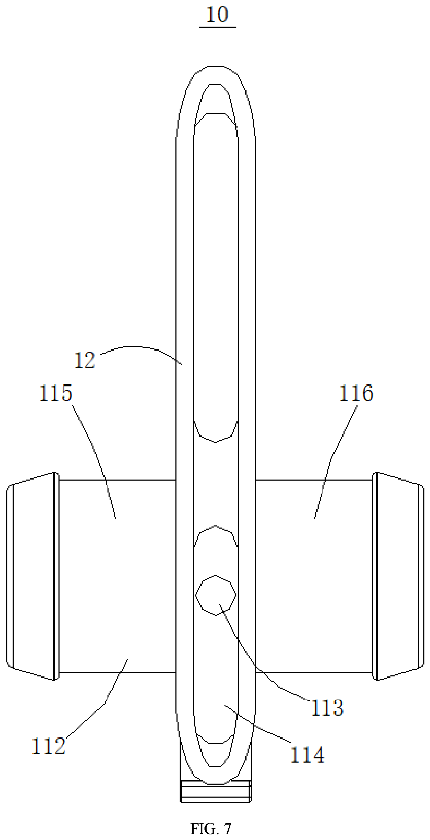

Referring to FIG. 7, in some embodiments, the current collecting portion 111 includes a main body portion and a spacing portion, the main body portion is provided with a first flow channel, the spacing portion is disposed in the first flow channel and separates the first flow channel into a first flow section and a second flow section, the spacing portion is provided with a flow-through hole 113, and the first flow section and the second flow section are communicated through the flow-through hole 113.

The shapes of the first flow section and the second flow section may be set as required, and the first flow section is in communication with the second flow channel 117, such that the shape of the first flow section may be set as required to facilitate the communication with the second flow channel 117. Furthermore, the second flow section may also be shaped as required. Specifically, the second flow section may be configured as a groove body 114, and the flow-through hole 113 is communicated with the groove body 114. Because the overall hole diameter of the flow-through hole 113 is small, and there may be a plurality of heat exchange channels in the heat exchanger 20, in order to enable the heat exchange medium to flow into the plurality of heat exchange channels at the same time, the groove body 114 is disposed, the heat exchange medium may first fill the groove body 114, and the groove body 114 may be communicated with the plurality of heat exchange channels to be injected into the plurality of heat exchange channels at the same time, and the groove body 114 at the other end of the current collecting assembly 10 may collect the heat exchange medium of the plurality of heat exchange channels. The connector 12 may be disposed in a form of surrounding the groove body 114, such that the groove body 114 is closed, and the heat exchange medium in the groove body 114 does not overflow but directly flows into the heat exchange channel.

The flow-through hole 113 is a channel with a certain inner diameter and has a certain extension length. The direction of the flow-through hole 113 may be set as required, such that the flow-through hole can inject the liquid into the heat exchange channel at a specific position, or collect the backflow liquid of the heat exchange channel at a specific position.

Specifically, directions and lengths of the flow hole 113 of the liquid inlet current collector 11 and the flow-through hole 113 of the liquid outlet current collector 11 may be different, the flow-through hole 113 of the liquid inlet current collector 11 may be communicated with the heat exchange channel on the upper side of the heat exchanger 20, and the flow-through hole 113 of the liquid outlet current collector 11 may be communicated with the heat exchange channel on the lower side of the heat exchanger 20, and since the heat exchange channels are communicated with each other, the heat exchange medium may fill the entire heat exchanger 20 from top to bottom when circulating in the heat exchanger 20. Specifically, in order to facilitate communication, the liquid inlet flow-through hole 113 and the liquid outlet flow-through hole 113 may be respectively formed in the upper portion and the lower portion of the corresponding surfaces of the two current collectors 11.

According to an embodiment of the present application, the first flow section and the second flow section are disposed, such that the first flow section and the second flow section may be selected to have a specific shape according to the form of the second flow channel 117 or the heat exchange channel, so as to be more easily communicated.

In a second aspect, the present application provides a preparation process, applied to preparing the current collecting assembly 10 according to any one of the above embodiments, and the preparation process includes the following steps:
the connector 12 is placed in a first mold for molding;
the molded connector 12 is placed in a second mold; and
a molten liquid is cast into the second mold, where the molten liquid wraps at least a part of the connector 12, and demolding is performed after the molten liquid is solidified to form the current collector 11.

The mold for injection molding may include two parts, i.e., a movable mold and a fixed mold, and is used by means of an injection molding machine, the movable mold may be mounted on a movable mold plate of the injection molding machine, and the fixed mold may be mounted on a fixed mold plate of the injection molding machine. During injection molding, the movable mold and the fixed mold are closed to form a casting system and a mold cavity, and during mold opening, the movable mold and the fixed mold are separated to take out the injection molded part. The connector 12 may be pre-embedded and positioned in the cavity before casting to form whole casting. After casting is completed, after a certain time, the mold is opened, to obtain the current collecting assembly 10 provided in this embodiment.

This embodiment provides specific implementation steps of preparing the current collecting assembly 10, and the preparation method is simple and easy to operate, which reduces the preparation difficulty of the current collecting assembly 10 and saves the cost.

The current collecting assembly 10 can be obtained by the preparation process provided by this embodiment, and compared with the processing method for the current collecting assembly 10 in the prior art, the preparation process has the advantages of low processing difficulty and high processing efficiency, and reduces the cost to a certain extent.

According to the embodiments provided in the present application, in some cases, the current collector 11 after demolding includes a current transporting portion 112 and a current collecting portion 111, which are respectively configured to form the second flow channel 117 and the first flow channel, and a specific form may be that the current transporting portion 112 is a tube body or two connecting joints. Therefore, in some cases, in order to further refine the processing of the current collector 11, the ends of the tube body or the two connecting joints may be processed by machining after the demolding is completed, such that a sealing part such as a sealing sleeve or a connecting sleeve can be connected to meet the use requirements. The first flow channel may be cast and formed by injection molding, and for some first flow channels with special shapes, the first flow channels may also be completed by machining after injection molding.

In a third aspect, the present application provides a heat exchange apparatus, including the current collecting assembly 10 provided in any one of the above embodiments.

The heat exchange apparatus may include a liquid supply system, which may specifically be some pipelines and a pump body, and may also include a pipeline for returning water, a heat exchanger, and the like, and the heat exchanger 20 is also a part of the heat exchange apparatus, and the heat exchange apparatus includes the current collecting assembly 10 provided in this embodiment, such that the difficulty of preparing the heat exchange apparatus may be reduced and the cost may be saved.

In a fourth aspect, referring to FIG. 11, the present application provides a battery 100, and the battery 100 includes the heat exchange apparatus provided in the above embodiment. After the battery 100 is configured with the heat exchange apparatus in the present application, the manufacturing cost of the battery 100 is also reduced, and the difficulty of preparing the battery 100 is reduced.

In a fifth aspect, the present application further provides an electric device, including the battery 100 provided in the above embodiment. Therefore, the difficulty in preparing the electric device is reduced, and the preparation cost is reduced.

Finally, it should be noted that: the above embodiments are only used to illustrate the technical solutions of the present application, but not to limit them. Although the present application has been described in detail with reference to the foregoing embodiments, those of ordinary skill in the art should understand that: they can still make modifications on the technical solutions described in the aforementioned embodiments or make equivalent replacements on some or all of the technical features; and these modifications or replacements do not make the essence of the corresponding technical solutions depart from the spirit and scope of the technical solutions of the various embodiments of the present application. All such modifications and replacements should fall within the scope of the claims and specification of the present application. In particular, the technical features mentioned in the embodiments may be combined in any manner provided that no structural conflict is present. The present application is not limited to the specific embodiments disclosed herein, but includes all technical solutions falling within the scope of the claims.

## Claims

1. A current collecting assembly, comprising a current collector and a connector, wherein the current collector is a non-metal part, the connector is a metal part, the current collector and the connector are integrally formed components, and the current collector is connected to a heat exchanger through the connector.

2. The current collecting assembly according to claim 1, wherein the current collector is an injection-molded component, and the current collector wraps at least a part of the connector, such that the current collector is connected to the connector.

3. The current collecting assembly according to claim 2, wherein the current collector is a thermoplastic material component.

4. The current collecting assembly according to claim 3, wherein the thermoplastic material component is one or more of an acrylonitrile butadiene styrene (ABS) material component, a polyethylene component, a polypropylene component, a polyvinyl chloride component, a polystyrene component, a polyoxymethylene component, a polycarbonate component, and a polyamide component.

5. The current collecting assembly according to any one of claims 1 to 4, wherein a limiting structure is disposed between the current collector and the connector, and the current collector is connected to the connector through the limiting structure.

6. The current collecting assembly according to claim 5, wherein the limiting structure comprises a convex portion and a concave portion, the convex portion is disposed on one of the connector and the current collector, the concave portion is disposed on the other one of the connector and the current collector, and the convex portion is embedded into the concave portion, such that the current collector is connected to the connector.

7. The current collecting assembly according to claim 6, wherein the convex portion has a shape of one or more of a hook shape, a barb shape, and a bent shape.

8. The current collecting assembly according to claim 6, wherein the concave portion is one or more of a hook-shaped notch, a barb-shaped notch, and a bent notch.

9. The current collecting assembly according to any one of claims 5 to 8, wherein the connector is annularly disposed at a port of the current collector close to the heat exchanger.

10. The current collecting assembly according to claim 9, wherein the limiting structure is evenly distributed in a circumferential direction of the connector.

11. The current collecting assembly according to any one of claims 1 to 10, wherein a material of the connector is the same as a material of the heat exchanger, or the material of the connector is one or more of aluminum, an aluminum alloy, iron, steel, or copper.

12. The current collecting assembly according to any one of claims 1 to 11, wherein the connector is welded to the heat exchanger.

13. The current collecting assembly according to any one of claims 1 to 12, wherein the current collector comprises a current collecting portion and a current transporting portion, the current collecting portion is provided with a first flow channel, the first flow channel is configured to communicate with the heat exchange channel of the heat exchanger, the current transporting portion is connected to the current collecting portion, the current transporting portion is provided with a second flow channel, and the second flow channel is in communication with the first flow channel.

14. The current collecting assembly according to claim 13, wherein the current transporting portion comprises a tube body, the second flow channel is formed in an inner cavity of the tube body, the current collecting portion is provided with a through hole, the tube body is disposed in the through hole, and the tube body is provided with a through hole communicating with the first flow channel.

15. The current collecting assembly according to claim 13, wherein the current transporting portion comprises a first connecting joint and a second connecting joint connected to the current collecting portion, the first connecting joint is provided with a first channel, the second connecting joint is provided with a second channel, and the first channel is in communication with the second channel to form the second flow channel.

16. The current collecting assembly according to claim 15, wherein the first connecting joint and the second connecting joint are connected to two opposite sides of the current collecting portion.

17. The current collecting assembly according to claim 15, wherein the current collecting portion comprises a main body portion and a spacing portion, the main body portion is provided with the first flow channel, the spacing portion is disposed in the first flow channel and spaces the first flow channel into a first flow section and a second flow section, the spacing portion is provided with a flow-through hole, and the first flow section and the second flow section are connected through the flow-through hole.

18. A preparation process, applied to preparing the current collecting assembly according to any one of claims 1 to 17, comprising the following steps:
placing the connector in a first mold for molding;
placing the molded connector in a second mold; and
casting a molten liquid into the second mold, wherein the molten liquid wraps at least a part of the connector, and performing demolding after the molten liquid is solidified to form the current collector.

19. A heat exchange apparatus, comprising a heat exchanger and the current collecting assembly according to any one of claims 1 to 17, wherein the heat exchanger is connected to the connector.

20. A battery, comprising the heat exchange apparatus according to claim 19.

21. An electric device, comprising the battery according to claim 20.
